# EUROPÄISCHE PATENTSCHRIFT

(11) **EP 2 293 979 B1**
(45) Veröffentlichungstag und Bekanntmachung des Hinweises auf die Patenterteilung: **30.09.2015**
(21) Anmeldenummer: 09780173.2
(22) Anmeldetag: 06.07.2009
(51) Int. Cl.: B64C 25/40, B60L 11/18, B60K 7/00, B64D 41/00

(54) **FLUGZEUG MIT EINER BRENNSTOFFZELLE ALS ENERGIEQUELLE FÜR EIN RADANTRIEBSSYSTEM**
AIRCRAFT COMPRISING A FUEL CELL AS AN ENERGY SOURCE FOR A WHEEL DRIVE SYSTEM
AÉRONEF COMPRENANT UNE PILE À COMBUSTIBLE COMME SOURCE D'ÉNERGIE POUR UN SYSTÈME D'ENTRAÎNEMENT DE ROUE

(30) Priorität: 07.07.2008 DE 102008031933; 07.07.2008 US 134181
(43) Veröffentlichungstag der Anmeldung: 16.03.2011
(73) Patentinhaber: Airbus Operations GmbH, 21129 Hamburg (DE)
(72) Erfinder: RÖTGER, Thomas, 1296 Coppet (CH); HEINRICH, Hans-Jürgen, 22609 Hamburg (DE); KURRE, Jens-Dietrich, 21244 Buchholz (DE)
(74) Vertreter: Maiwald Patentanwalts GmbH
(86) Internationale Anmeldenummer: PCT/EP2009/058487
(87) Internationale Veröffentlichungsnummer: WO 2010/003911

(56) Entgegenhaltungen:
- DE-A1- 10 223 117
- DE-A1- 19 617 548
- DE-A1- 19 815 455
- GB-A- 619 254
- US-A1- 2005 048 334
- US-A1- 2005 224 642
- US-A1- 2006 065 779

## Beschreibung

### TECHNISCHES GEBIET

Die Erfindung betrifft ein Flugzeug und die Verwendung einer Brennstoffzelle als Energieversorgung für ein Radantriebssystem in einem Flugzeug.

### HINTERGRUND DER ERFINDUNG

Der Rollvorgang von Flugzeugen zwischen einer Parkposition und einer Start- und Landebahn wird üblicherweise durch ein Schleppfahrzeug und/oder durch Schubkraft aus den Haupttriebwerken des Flugzeugs realisiert. Das Schleppfahrzeug ist insbesondere dafür notwendig, das Flugzeug rückwärts aus seiner Parkposition ("Nose In") herauszubefördern ("Push-back"). Der Rollvorgang zur Startposition und vom Landepunkt zur Parkposition erfolgt mit den Haupttriebwerken bei niedriger Schubleistung. Bei alternativen Prozeduren wird das Flugzeug mit einem Schleppfahrzeug zu einer Position nahe der Startposition geschleppt, so dass die Haupttriebwerke des Flugzeugs zu einem spätestmöglichen Zeitpunkt gestartet werden können.

Alternativ dazu wird in der WO 2006/138267 A2 vorgeschlagen, das Fahrwerk des Flugzeugs durch einen Elektromotor wahlweise zur Vorwärts- und zur Rückwärtsfahrt anzutreiben. Die Stromversorgung des Motors erfolgt dabei durch das Hilfstriebwerk (APU).

US 2006/065779 A1 offenbart ein Radantriebssystem für ein Flugzeug, bei dem ein Radmotor mit einer Radachse und einem Rad gekoppelt ist. Während der Landung lässt sich mit dem Radantriebssystem das Rad frei drehen, um anschließend ein Taxiing mittels des Radmotors durchzuführen. US 2005/224642 A1 offenbart ein Flugzeug mit einem Elektromotor, welcher sich mit einem Rad des Fahrwerks koppeln lässt, einer Energiequelle für den Elektromotor, einer Regeleinheit zum Steuern des vom Elektromotor abzugebenden oder aufzunehmenden Drehmoments, wobei der Elektromotor dazu eingerichtet ist, zum Bremsen ein der Raddrehung gegenläufiges Drehmoment aufzubringen und im Generatorbetrieb elektrische Energie an eine Speichereinheit abzugeben.

DE 10223117 A1 offenbart die Verwendung einer Brennstoffzelle zum Betrieb eines Antriebssystems eines Flugzeugs.

Bei der Standardprozedur zum Rollen von Flugzeugen zu einer Start- und Landebahn wird relativ viel Treibstoff verbraucht, da die Haupttriebwerke den für den Rollvorgang notwendigen Schub erzeugen müssen, zumal der Wirkungsgrad der Haupttriebwerke bei niedriger Leistung relativ schlecht ist. Einher geht parallel eine starke CO₂-Emission. Flughafenpersonal und Anwohner werden durch die starke Abgasemission, insbesondere durch Kohlenwasserstoffe und Kohlenmonoxid beeinträchtigt. Weiterhin werden Personen, Fahrzeuge und andere Flugzeuge durch den Düsenstrahl der Haupttriebwerke ("Jet Blast") gefährdet. Der Lärm, hervorgerufen durch die Haupttriebwerke, stellt eine Belastung dar. Die Triebwerks-Wartungskosten werden durch die zusätzliche Laufzeit erhöht. Zusätzlich dazu müssen Schleppfahrzeuge für das Ausrollen der Flugzeuge aus der Parkposition bereitgestellt werden, was die Betriebskosten erhöht.

Bei der alternativen Prozedur zum Rollen des Flugzeugs sind die Schleppfahrzeuge wesentlich länger im Einsatz, so dass auf einem Flughafen mehr Schleppfahrzeuge zur Verfügung stehen müssen. Bei vollgetankten Flugzeugen ist außerdem die realisierbare Schleppgeschwindigkeit relativ niedrig, so dass Stauungen im Rollverkehr verursacht werden können. Zusätzlich dazu muss die Strom- und Luftversorgung des Flugzeugs sichergestellt werden, so dass insbesondere die Klimaanlage betrieben werden kann. Diese Versorgung kann beispielsweise durch das Schleppfahrzeug realisiert werden, was jedoch die Schleppleistung reduzieren könnte. Wahlweise kann die Versorgung auch durch die APU erfolgen, was jedoch erhebliche Lärm- und Abgasemissionen zur Folge hat. Zudem ist die APU-Benutzung an vielen Flughäfen eingeschränkt oder sogar verboten. Ferner erhöht die APU-Nutzungsdauer direkt die APU-Wartungskosten.

### ZUSAMMENFASSUNG DER ERFINDUNG

Die Aufgabe der Erfindung ist, ein Flugzeug mit einem Radantriebssystem einschließlich einer zugehörigen Energiequelle vorzuschlagen, bei dem insbesondere die Abgas- und Lärmemissionen verringert werden. Zusätzlich ist eine Aufgabe der Erfindung, die Betriebszeiten und die Wartungskosten der Haupttriebwerke und der APU nicht zu erhöhen.

Die Aufgabe wird durch die Merkmale der nachfolgenden Ansprüche gelöst.

Die Brennstoffzelle als elektrische Energiequelle an Bord von Flugzeugen kann einige oder alle Funktionen einer APU ersetzen. Die Brennstoffzelle selbst erzeugt neben der elektrischen Leistung als Nebenprodukte weder Schadstoffe, Lärm, noch CO₂, sondern nur Wasser. Nur wenn der Wasserstoff in einem "Reforming"-Prozess aus Kerosin im Flugzeug gewonnen wird, entsteht eine begrenzte Menge an Abgasen. Der Wirkungsgrad einer Brennstoffzelle ist zudem wesentlich höher als der einer üblichen APU, so dass die Verwendung der Brennstoffzelle somit zu einem geringeren Treibstoffverbrauch führt. Gegenüber einer Versorgung durch die APU macht das erfindungsgemäße Flugzeug die Verwendung eines motorisierten Fahrwerks damit wirtschaftlicher, umweltfreundlicher und wesentlich attraktiver. Auf Flughäfen mit Restriktionen beim APU-Betrieb ist weiterhin eine uneingeschränkte Nutzung der Brennstoffzellen betriebenen Fahrwerksmotoren möglich.

Der Elektromotor ist dazu eingerichtet, zum Bremsen ein der Raddrehung gegenläufiges Drehmoment aufzubringen. Dies könnte beispielsweise dadurch erfolgen, dass beim Bremsen der Elektromotor als Generator betrieben wird und die beim Bremsen erzeugte Energie in dafür geeigneten Einrichtungen gespeichert werden kann. Durch geeignete Wahl und Dimensionierung des Elektromotors kann durch kontrolliertes Aufbringen eines gegenläufigen Drehmoments der kritische Bremsfall auch bei widrigen Bodenverhältnissen abgedeckt werden, so dass insbesondere die Wärmelast für das Fahrwerk minimiert werden kann. Dadurch können die üblichen Fahrwerksbremsen des Flugzeugs entlastet werden, so dass deren Verschleiß und Wartungsfrequenz verringert werden können.

Das erfindungsgemäße Flugzeug weist ferner eine Regeleinheit zum Steuern des vom Motor abzugebenden oder aufzunehmenden Drehmoments auf. Dadurch könnte beispielsweise eine Integration in ein sogenanntes "Brake-to-vacate"-System erfolgen, bei dem die Bremsleistung dahingehend optimiert wird, dass das Flugzeug nach seiner Landung einen vorbestimmten Taxiway zuverlässig erreicht.

Der Elektromotor gibt im Generatorbetrieb elektrische Energie an mindestens eine Speichereinheit und/oder an mindestens einen Verbraucher ab. Durch das Speichern der im Generatorbetrieb erzeugten elektrischen Energie kann der gesamte Verbrauch elektrischer Energie im Flugzeug reduziert werden.

Die Speichereinheit wird mittels einer Wasser-Elektrolyseeinrichtung realisiert. Diese Elektrolyseeinrichtung dient dazu, beispielsweise aus Wasser Wasserstoff und Sauerstoff zu gewinnen, wobei der gewonnene Wasserstoff entsprechend gespeichert später zum Betrieb der Brennstoffzelle verwendet werden kann. Die Elektrolyseeinrichtung kann dabei die oder eine Brennstoffzelle sein, die in einem umgekehrten Brennstoffzellenprozess nicht zur Erzeugung von elektrischer Energie verwendet wird, sondern unter Einsatz von elektrischer Energie und Zufuhr von Wasser die beiden Elemente Wasserstoff und Sauerstoff aus dem zugeführten Wasser trennt. Das erfindungsgemäße Radantriebssystem ist jedoch nicht darauf beschränkt, ausschließlich entweder Kondensatoren, Elektrolyseeinrichtungen oder andere Speichereinheiten zu verwenden, sondern es können auch alle Arten von bekannten Speichereinheiten parallel zueinander verwendet werden. Dadurch wäre es möglich, sowohl elektrische Lastspitzen ausgleichen zu können, als auch parallel Wasserstoff zum Betrieb einer Brennstoffzelle zu erzeugen.

Besonders bevorzugt ist ferner eine Wasserspeichereinrichtung zum Aufnehmen von Wasser aus der Brennstoffzelle. Das in der Brennstoffzelle als Verbrennungsprodukt erzeugte Wasser ist sehr rein, so dass es beispielsweise für Kühleinrichtungen verwendet werden könnte oder entsprechend aufbereitet auch als Trinkwasser.

Besonders bevorzugt wird die Elektrolyseeinrichtung mit Wasser aus der Wasserspeichereinrichtung versorgt. Dies hat zur Folge, dass das in dem normalen Brennstoffzellenprozess angefallene Wasser wiederverwendet und etwa beim Bremsen - beim Betrieb des Elektromotors als Generator - wieder in Wasserstoff und Sauerstoff getrennt werden könnte. Dadurch könnte auf eine Entnahme von Wasser aus dem Bordwasserversorgungssystem für die Elektrolyseeinrichtung verzichtet werden, so dass es möglich wäre, zusätzlich Leitungen und Ventile einzusparen. Alternativ oder zusätzlich hierzu könnte das in der Brennstoffzelle entstandene Wasser dazu verwendet werden, die herkömmlichen Bremsen des Fahrwerks zu kühlen, wobei das Wasser auf die Bremsen aufgesprüht und dort verdampft werden könnte.

Bei einem nicht erfindungsgemäßen Radantriebssystem kann die Speichereinheit auch mittels mindestens eines Kondensators realisiert sein. Dieser Kondensator könnte ein sogenannter "Superkondensator" sein, der aufgrund seiner hohen Kapazität in der Lage ist, große Beträge elektrischer Energie in möglichst kurzer Zeit aufzunehmen. Die in den Kondensatoren gespeicherte elektrische Energie kann genauso schnell wieder entnommen werden, wodurch das erfindungsgemäße Radantriebssystem besonders dazu geeignet ist, bei Lastspitzen im elektrischen System des Flugzeugs die Energiezufuhr aus den Brennstoffzellen zu unterstützen.

Die Regeleinheit ist dazu eingerichtet, dass zum Erhöhen der elektrischen Energiezufuhr an den Elektromotor die elektrische Energiezufuhr an andere elektrische Verbraucher des Flugzeugs reduziert wird. Ist die zum Antrieb des Fahrwerks benötigte Leistung nur wenig geringer als die maximale Leistung der Brennstoffzelle, so werden durch eine geeignete Regelung andere Verbraucher heruntergefahren, insbesondere kann die Klimaanlage zur Klimatisierung der Flugzeugkabine während des Rollens im Sparbetrieb laufen. Der Komfortverlust durch eine im Sparbetrieb laufende Klimaanlage kann bei heißem Wetter dadurch minimiert werden, dass die Flugzeugkabine vor Beginn des Rollvorgangs auf eine geringfügig niedrigere Temperatur als üblich geregelt wird, so dass auch am Ende des Rollvorgangs der Komfort-Temperaturbereich nicht überschritten wird. Bei kaltem Wetter kann hingegen zusätzlich die Abwärme der Brennstoffzelle zum Aufheizen der Kabine genutzt werden. Die Regelung der Verbraucher kann über die bereits erwähnte Regeleinheit oder eine andere geeignete Regeleinheit erfolgen.

In einer bevorzugten Ausführungsform lässt sich der Elektromotor über ein Getriebe mit dem Rad koppeln, wobei in dem Antriebsstrang ein Drehmomentsensor angeordnet ist, der sich mit der Regeleinheit verbinden lässt. Das Getriebe zwischen dem Elektromotor und dem angetriebenen Rad des Fahrwerks könnte beispielsweise durch ein mehrere Kettengetriebe realisiert werden. Die Verwendung herkömmlicher Zahnradgetriebe alternativ oder in Kombination dazu ist denkbar. Falls erforderlich, könnte das Getriebe in mehrere verschiedene Übersetzungsstufen schaltbar ausgeführt sein, so dass längere Rollwege mit einer höheren Geschwindigkeit zurückgelegt werden könnten. Zum Anrollen des Flugzeugs bis auf eine geringe Geschwindigkeit könnte das Getriebe in ein höheres Übersetzungsverhältnis zurückgeschaltet werden. Dies hat den Vorteil, dass der Elektromotor in einem optimalen Drehzahlbereich betrieben wird, wodurch er geringer dimensioniert werden kann. Durch den im Antriebsstrang zwischen dem Elektromotor und dem Rad angeordneten Drehmomentsensor kann festgestellt werden, welches Drehmoment beim Antrieb oder beim Bremsen anliegt, so dass die Regeleinheit beim Bremsen die Bremsleistung bestimmen kann und beim Rollantrieb die zugeführte elektrische Energie regelt. Zusätzlich könnte die Kenntnis des aktuellen Drehmoments zum Betrieb eines Führungssystems zum Durchführen eines selbstständigen Rollens hilfreich sein, da Beschleunigungs- und Bremsvorgänge vorausschauend und energieeffizient geregelt werden können.

Zusätzlich kann der Rollantrieb genutzt werden, um eine Flugzeug von mobilen Stationen, Leitständen oder vom Tower fernzusteuern.

Ferner wird die Aufgabe gelöst durch die Verwendung einer Brennstoffzelle zum Betrieb eines Radantriebssystems eines Flugzeugs gemäß Anspruch 7.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und der Figuren. Dabei bilden alle beschriebenen und/oder bildlich dargestellten Merkmale für sich und in beliebiger Kombination den Gegenstand der Erfindung auch unabhängig von ihrer Zusammensetzung in einzelnen Ansprüchen oder deren Rückbeziehung. In den Figuren stehen weiterhin gleiche Bezugszeichen für gleiche oder entsprechende Objekte. Es zeigen:
- Fig. 1:: eine Übersicht über das erfindungsgemäße Radantriebssystem;
- Fig. 2a+b:: zwei Brennstoffzellenarchitekturen für das erfindungsgemäße Radantriebssystem; und
- Fig. 3:: eine Brennstoffzelle während des Elektrolysebetriebs.

### DETAILLIERTE BESCHREIBUNG EXEMPLARISCHER AUSFÜHRUNGSBEISPIELE

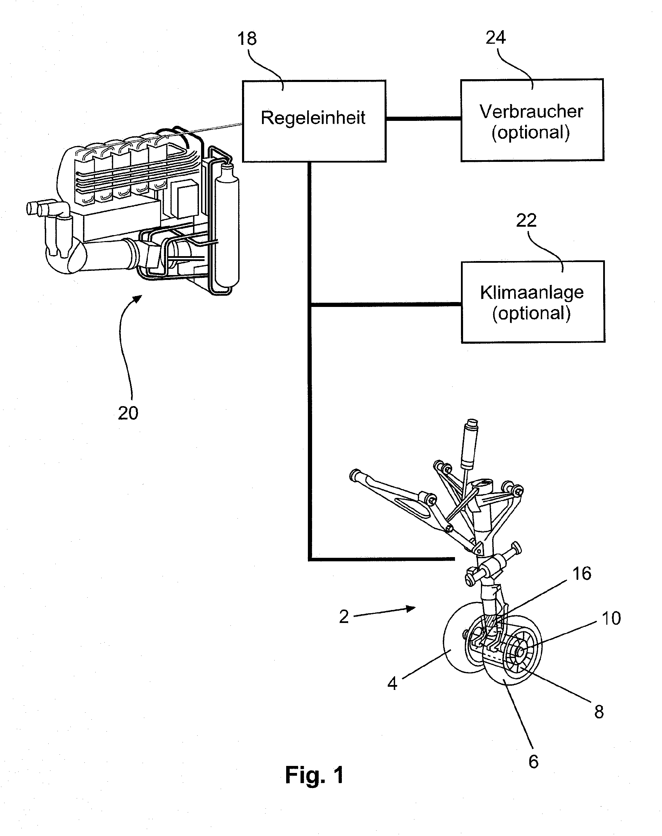

Fig. 1 zeigt in einer Übersicht eine mögliche Ausführung eines Radantriebssystems. Ein Fahrwerk 2 weist zusätzlich zu den üblichen Baugruppen wie Räder 4 und 6, Reifen, Stoßdämpfer, Verriegelung, Einfahrmechanismus, Klappen, Bremsen, Notausfahrfedern, folgende Baugruppen auf: Elektromotor 8, Getriebe 10, Steuerungs- und Messelektronik/ -Sensor 16. Der Elektromotor 8 ist über ein Getriebe 10 mit den Rädern 4 und 6 gekoppelt. Ein Drehmomentsensor 16 wird verwendet zum Bestimmen des vom Motor 8 aufgebrachten oder aufgenommenen Drehmoments verwendet wird. Der ermittelte Wert des Drehmoments kann beispielsweise zum Optimieren des Bremsvorgangs oder eines Beschleunigungsvorgangs und damit der elektrischen Energiezufuhr verwendet werden.

Der Elektromotor 8 ist mit einer Regeleinheit 18 verbunden, die die Zufuhr von elektrischer Energie an den Elektromotor 8 und optional an andere Verbraucher von und zu einer Brennstoffzelle 20 steuert. Im Rollbetrieb wird durch die Regeleinheit 18 elektrische Energie an den Elektromotor 8 aus der Brennstoffzelle 20 geleitet, so dass die Räder 4 und 6 angetrieben werden können. Beim Bodenbetrieb des Flugzeugs können etwa eine Klimaanlage 22 und andere elektrische Verbraucher 24 optional ebenfalls über die Regeleinheit 18 mit elektrischer Energie aus der Brennstoffzelle 20 versorgt werden. Ist die Abgabeleistung der Brennstoffzelle 20 nur ein wenig geringer als die Leistungsaufnahme des Elektromotors 8, wird durch die Regeleinheit 18 die Zufuhr von elektrischer Energie an die Klimaanlage 22 und die Verbraucher 24 verringert, so dass diese im Sparbetrieb laufen.

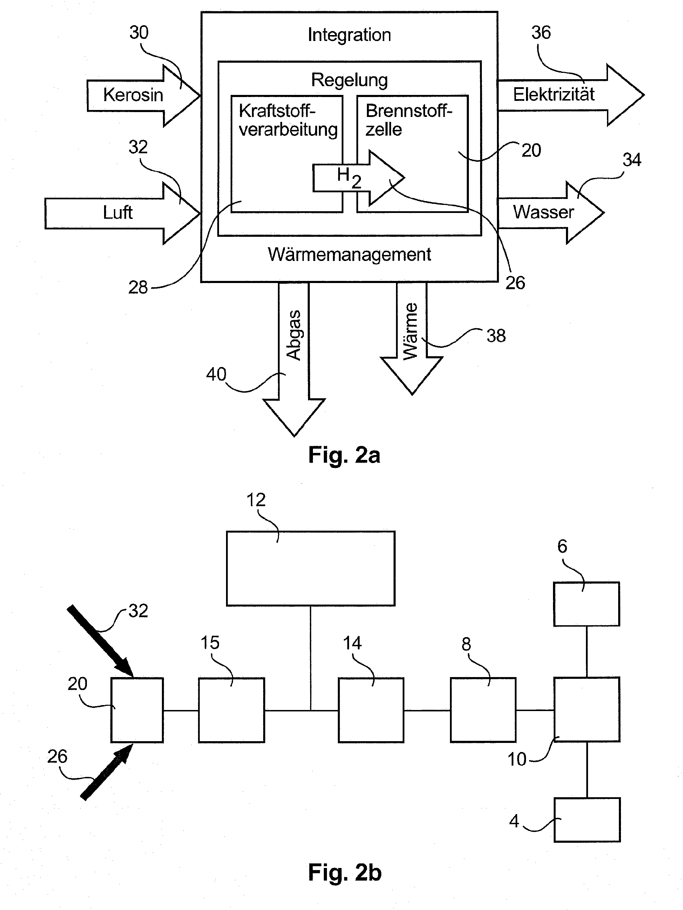

Fig. 2a zeigt allgemein die Brennstoffzellenarchitektur für das Radantriebssystem. Die Brennstoffzelle 20 wird durch Wasserstoff 26 versorgt, der in dem dargestellten Falle über einen "Reformer" 28 aus Kerosin 30 gewonnen wird. Zusätzlich zu Kerosin 30 wird Luft 32 der Brennstoffzelle 20 zugeführt, so dass beim Betrieb der Brennstoffzelle 20 neben Wasser 34 elektrische Leistung 36, Wärme 38 und Abgase 40 abgegeben werden. Durch die hohe Verfügbarkeit von Kerosin könnte Gewicht eingespart werden, was durch Speichereinrichtungen für gasförmigen Wasserstoff zusätzlich anfallen würde. Allerdings ist der Betrieb der Brennstoffzelle 20 nicht durch aus Kraftstoff hergestellten Wasserstoff beschränkt, es ist ebenso möglich, Wasserstoff aus einer separaten Speichereinrichtung zuzuführen, der am Boden betankt wird oder der durch einen Elektrolysevorgang während des Bodenaufenthalts des Flugzeugs aufgefüllt wird. Der Elektrolysevorgang könnte dabei mittels der Brennstoffzelle 20 in einem umgekehrten Brennstoffzellenprozess durchgeführt werden. Durch Verwendung reinen Wasserstoffs könnten die Abgase 40 vermieden werden.

Fig. 2b zeigt eine zweite mögliche Architektur, bei der Wasserstoff 26 und Luftsauerstoff 32 direkt zum Betrieb der Brennstoffzelle 20 verwendet wird. Das System ist als Hybrid-System ausgeführt. Eine Brennstoffzelle 20 stellt die notwendige Energie für den Fahrwerksantrieb bereit und hält die Batterie bzw. die Superkondensatoren 12 geladen. Die hier dargestellte Verschaltung von Batterie bzw. Superkondensator ist parallel ausgeführt. Die Aufgabe kann jedoch auch in Serienschaltung gelöst werden durch Kopplung von mindestens einer Brennstoffzelle mit mindestens einer Batterie oder Kondensator.

Die Batterie bzw. die Superkondensatoren 12 stellen zusätzlich Energie für die Beschleunigung bereit. Als weitere Möglichkeit kann der Motor 8 auch als Bremse arbeiten. In diesem Fall kann der Motor als Generator ausgeführt werden und die Energie der Batterie oder den Superkondensatoren 12 zurückgeführt werden. Es ist vorteilhaft, wenn ein Inverter 14 zum Wechselrichten von Gleichspannung aus der Batterie bzw. den Superkondensatoren 12 in das System integriert ist, wenn der Motor 8 als Wechselstrommotor ausgeführt werden kann. Gleichermaßen ist die Verwendung eines DC-DC-Wandlers 15 sinnvoll bzw. notwendig, um eine optimale Spannung zum Laden der Batterie bzw. der Superkondensatoren 12 und zum Betrieb des Motors 8 einzustellen.

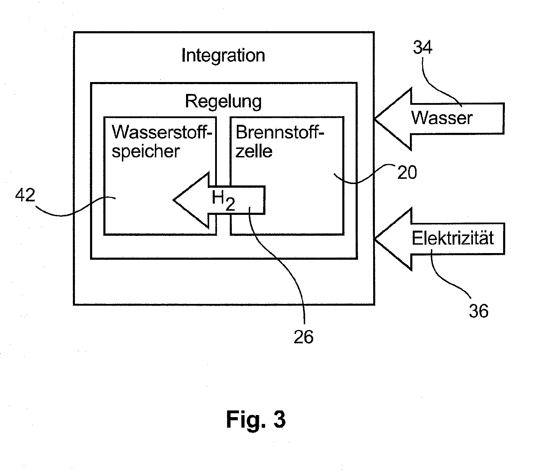

In Fig. 3 wird eine Übersicht über den Betrieb der Brennstoffzelle 20 als Elektrolyseeinrichtung dargestellt. Der Brennstoffzelle 20 wird Wasser 34 zugeführt, ebenso elektrische Energie 36. Innerhalb der Brennstoffzelle 20 wird das Wasser 34 in seine elementaren Bestandteile Wasserstoff 26 und Sauerstoff aufgespalten, wobei der Wasserstoff 26 in einer Speichereinheit 42 gespeichert werden kann. Diese Speichereinheit 42 kann den Wasserstoff 26 während des herkömmlichen Betriebs der Brennstoffzelle 20 wieder abgegeben werden, zusätzlich zu dem aus Kraftstoff 30 gewonnenen Wasserstoff, alternativ dazu oder in Kombination mit bereits vorher gespeichertem Wasserstoff.

Aus dem Radantriebssystem resultieren eine Reihe von Vorteilen. Der Energiebedarf des Elektromotors ist niedriger als der Energiebedarf der Haupttriebwerke, insbesondere aufgrund ihres schlechten Wirkungsgrads bei niedriger Schubleistung. Dadurch kann direkt Treibstoff und damit Kosten eingespart und der Ausstoß von CO₂ und Schadstoffen - vor allen Dingen Kohlenmonoxid und unverbrannte Kohlenwasserstoffe - reduziert werden. Personen, Fahrzeuge und andere Flugzeuge werden zudem nicht durch den Düsenstrahl während des Rollvorgangs des Flugzeugs gefährdet, denn die Haupttriebwerke müssen erst auf der erreichten Start- und Landebahn eingeschaltet werden. Zum Zurückstoßen aus der Parkposition wird kein Schleppfahrzeug benötigt, so dass ein autonomer Rollbetrieb bei Nichtverfügbarkeit von Schleppfahrzeugen oder zum Erreichen sehr kurzer Turn-Around-Zeiten möglich ist, was wiederum die Produktivität sowohl des Flugzeugs als auch des Flughafens (Verfügbarkeit von Standplätzen) erhöht. Weiter vorteilhaft könnte die Integration der Steuerung durch elektronische Führungssysteme sein, durch die das Flugzeug auch von außen an eine freie Start- und Landebahn geführt werden könnte.

Durch die Stromversorgung des Elektromotors durch die Brennstoffzelle ist außerdem der Energiebedarf aufgrund des besseren Wirkungsgrads der Brennstoffzelle verglichen mit einem Hilfstriebwerk (APU) deutlich niedriger. Es werden weder Lärm, Feinstaub und - außer durch den Reforming-Prozess - keine Abgase erzeugt. Damit ist ein Betrieb auch an Flughäfen mit Beschränkung oder Verbot des APU-Betriebs möglich.

Brennstoffzellen sind zudem sehr wartungsarm, daher entfallen hohe Wartungskosten für den Betrieb einer APU oder der Haupttriebwerke. Durch den Generatorbetrieb der Elektromotoren kann eine Bremswirkung erzielt werden, so dass der Abrieb der Bremsscheiben und damit die Feinstaubemission weiter reduziert werden können. An einer Parkposition kann eine vorhandene Bodenstromversorgung genutzt werden, um mit Hilfe der Brennstoffzelle im umgekehrten Betrieb Wasserstoff zu erzeugen, der später als Brennstoff genutzt werden könnte.

Zusätzlich zu den genannten Vorteilen besteht ferner die Möglichkeit, die Räder der Fahrwerke auf eine geeignete Umfangsgeschwindigkeit zu bringen, so dass die Reifenabnutzung verringert werden kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN

- 2: Fahrwerk
- 4: Rad
- 6: Rad
- 8: Elektromotor
- 10: Getriebe
- 12: Batterie / Superkondensator
- 14: Inverter
- 15: DC-DC-Wandler
- 16: Drehmomentsensor
- 18: Regeleinheit
- 20: Brennstoffzelle
- 22: Klimaanlage
- 24: elektrischer Verbraucher
- 26: Wasserstoff
- 28: Reformer
- 30: Kerosin
- 32: Luft
- 34: Wasser
- 36: elektrische Leistung
- 38: Wärme
- 40: Abgas
- 42: Speichereinheit

## Patentansprüche

1. Flugzeug, aufweisend:
mindestens einen Elektromotor (8);
mindestens eine Brennstoffzelle (20) als Energiequelle für den Elektromotor (8);
eine Regeleinheit (18) zum Steuern des vom Elektromotor (8) abzugebenden oder aufzunehmenden Drehmoments; und
mindestens ein Fahrwerk (2);
wobei sich der Elektromotor (8) mit zumindest einem Rad (4, 6) des Fahrwerks (2) koppeln lässt;
wobei der Elektromotor (8) dazu eingerichtet ist, zum Bremsen ein der Raddrehung gegenläufiges Drehmoment aufzubringen;
wobei der Elektromotor (8) im Generatorbetrieb elektrische Energie an mindestens eine Speichereinheit und/oder mindestens einen Verbraucher (24) abgibt; **dadurch gekennzeichnet, dass** die Speichereinheit mittels einer Wasser-Elektrolyseeinrichtung realisiert ist und dass die Regeleinheit (18) dazu eingerichtet ist, zum Erhöhen der elektrischen Energiezufuhr an den Elektromotor (8) eine Reduzierung der elektrischen Energiezufuhr von der Brennstoffzelle (20) an andere elektrische Verbraucher (24) des Flugzeugs zu veranlassen.

2. Flugzeug nach Anspruch 1, wobei die Elektrolyseeinrichtung mittels der Brennstoffzelle (20) realisiert ist.

3. Flugzeug nach Anspruch 1 oder 2, ferner aufweisend eine Wasserspeichereinrichtung zum Aufnehmen von Wasser aus der Brennstoffzelle (20).

4. Flugzeug nach Anspruch 3, wobei die Elektrolyseeinrichtung mit Wasser aus der Wasserspeichereinrichtung versorgt wird.

5. Flugzeug nach einem der vorhergehenden Ansprüche, bei dem die Regeleinheit (18) dazu eingerichtet ist, ein Einstellen der Temperatur in einer Kabine des Flugzeugs in Abhängigkeit von der Außentemperatur vor Beginn eines Rollvorgangs so zu veranlassen, dass trotz Drosselung einer Klimaanlage (22) während des gesamten Rollvorgangs ein Komforttemperaturbereich nicht überschritten wird.

6. Flugzeug nach einem der vorhergehenden Ansprüche, wobei sich der Elektromotor (8) über ein Getriebe (10) mit dem Rad (4, 6) koppeln lässt und wobei in dem Antriebsstrang ein Drehmomentsensor (16) angeordnet ist, der sich mit der Regeleinheit (18) verbinden lässt.

7. Verwendung einer Brennstoffzelle (20) zum Betrieb eines Radantriebssystems eines Flugzeugs, wobei zum Erhöhen der elektrischen Energiezufuhr an einen Elektromotor des Radantriebssystems eine Reduzierung der elektrischen Energiezufuhr von der Brennstoffzelle (20) an andere elektrische Verbraucher (24) des Flugzeugs veranlasst wird.

## Claims

1. Aircraft, comprising:
at least one electric motor (8); and
at least one fuel cell (20) as energy source for the electric motor (8);
control unit (18) for controlling the torque to be generated or absorbed by the electric motor (8); and
at least one landing gear (2);
wherein the electric motor (8) is coupleable to at least one wheel (4, 6) of the landing gear (2);
wherein the electric motor (8) is designed for generating a torque opposite to the rotating direction of the wheel in order to decelerate the aircraft;
wherein the electric motor (8) delivers electric energy to at least one storage unit and/or at least one consumer (24) in the generator mode;
**characterized in that** the storage unit is realized with a water electrolysis device and
that the control unit (18) adapted to initiate the reduction of electric energy supply to other electric consumers (24) of the aircraft in order to increase the electric energy supply to the electric motor (8).

2. The aircraft of claim 1, wherein the electrolysis device is realized with the fuel cell (20).

3. The aircraft of claim 1 or 2, further comprising a water storage device for accommodating water from the fuel cell (20).

4. The aircraft of claim 3, wherein the electrolysis device is supplied with water from the water storage device.

5. The aircraft of one of the preceding claims, wherein the control unit (18) is adapted for adjusting a temperature in a cabin of the aircraft before taxiing in dependence on the outside temperature in such a way that a comfort temperature range is not exceeded during the entire taxiing process despite the throttling of an environmental control system (22).

6. The aircraft of one of the preceding claims, wherein the electric motor (8) is coupleable to the wheel (4, 6) by means of a gear drive (10), and wherein a torque sensor (16) arranged in the drive train is connectable to the control unit (18).

7. The use of a fuel cell (20) for operating a wheel drive system of an aircraft, wherein the electric energy supply to other electric consumers (24) of the aircraft is reduced in order to increase the electric energy supply to the electric motor (8).

## Revendications

1. Aéronef, présentant :
au moins un moteur électrique (8) ;
au moins une pile à combustible (20) en tant que source d'énergie pour le moteur électrique (8) ;
une unité de régulation (18) pour commander le couple de rotation destiné à être délivré ou reçu par le moteur électrique (8) ; et
au moins un train d'atterrissage (2) ;
dans lequel le moteur électrique (8) peut être accouplé à au moins une roue (4, 6) du train d'atterrissage (2) ;
dans lequel le moteur électrique (8) est adapté pour appliquer un couple de rotation dans le sens opposé de la rotation de la roue pour freiner ;
dans lequel le moteur électrique (8) délivre en mode générateur une énergie électrique à au moins une unité de réservoir et/ou au moins une unité de consommation (24) ;
**caractérisé par le fait que**
l'unité de réservoir est réalisée au moyen d'un dispositif d'électrolyse de l'eau et que
l'unité de régulation (18) est adaptée pour provoquer une réduction de l'alimentation en énergie électrique d'autres unités de consommation électriques (24) de l'aéronef depuis la pile à combustible (20) pour augmenter l'alimentation en énergie électrique du moteur électrique (8).

2. Aéronef selon la revendication 1, le dispositif d'électrolyse étant réalisé au moyen de la pile à combustible (20).

3. Aéronef selon la revendication 1 ou 2, présentant en outre un dispositif de réservoir d'eau pour recevoir d'eau à partir de la pile à combustible (20).

4. Aéronef selon la revendication 3, le dispositif d'électrolyse étant alimenté en eau depuis le dispositif de réservoir d'eau.

5. Aéronef selon l'une des revendications précédentes, dans lequel l'unité de régulation (18) est adaptée pour provoquer un réglage de la température dans une cabine de l'aéronef en fonction de la température extérieure avant le début d'un roulement sur la piste de telle manière que, malgré la baisse d'une climatisation (22) pendant tout le temps où l'aéronef roule sur la piste, une plage de température de confort ne doit pas être dépassée.

6. Aéronef selon l'une des revendications précédentes, dans lequel le moteur électrique (8) peut être accouplé à la roue (4, 6) au moyen d'une transmission (10) et dans lequel un capteur de couple de rotation (16) est disposé dans la chaine cinématique qui peut se relier à l'unité de régulation (18).

7. Utilisation d'une pile à combustible (20) pour le fonctionnement d'un système d'entraînement de roue d'un aéronef, dans laquelle une réduction de l'alimentation en énergie électrique d'autres unités de consommation électriques (24) de l'aéronef depuis la pile à combustible (20) est provoquée pour augmenter l'alimentation en énergie électrique d'un moteur électrique du système d'entraînement de roue.
